# EUROPÄISCHE PATENTANMELDUNG

(11) **EP 0 567 884 A1**
(43) Veröffentlichungstag der Anmeldung: **03.11.1993**
(21) Anmeldenummer: 93106309.3
(22) Anmeldetag: 19.04.1993
(51) Int. Cl.: C08L 77/00, C08K 5/29

(54) **Hydrolysestabile Polyamide**

(30) Priorität: 30.04.1992 DE 4214193
(71) Anmelder: RHEIN CHEMIE RHEINAU GmbH, 68204 Mannheim (DE)
(72) Erfinder: Ullrich, Volker, Dr., W-6905 Schriesheim (DE)
(74) Vertreter: Gremm, Joachim, Dr.

(57) **Zusammenfassung**

Gegen Hydrolyse bei hohen Temperaturen, besonders in saurem Milieu stabilisierte Polyamide, welche 0,1 bis 5 Gew.-%, vorzugsweise 0,5 bis 4 Gew.-% eines polymeren, aromatischen Carbodiimides bezogen auf Polyamid enthalten.

## Beschreibung

Die Erfindung betrifft Polyamide, insbesondere 6-Polyamid, 6,6-Polyamid und 12-Polyamid, welche gegen Hydrolyse bei erhöhten Temperaturen im sauren Milieu beständig sind und ihre Herstellung. Die Erfindung betrifft auch Formkörper aus den Polyamiden, sowohl Spritzgußartikel als auch Extrudate (z.B. verstreckte, orientierte Monofilamente und Multifilamente). Die erfindungsgemäßen Polyamide enthalten geringe Mengen aromatischer Polycarbodiimide, durch die sie gegen hydrolytischen Abbau geschützt werden.

Es ist bekannt, daß Polyamide gegen Zerstörung durch Wärme und Licht bei erhöhten Temperaturen wirksam geschützt werden können durch Zusatz von
1. Salzen des Kupfers und des Mangans
2. Phosphor(III)-organischen Verbindungen
3. phenolischen Antioxidantien
4. aliphatischen oder aromatischen Aminen
Meist werden Kombinationen mehrerer dieser Verbindungen eingesetzt, um einen erwünschten synergistischen Effekt zu erreichen.

Keine der genannten Verbindungen ist jedoch in der Lage, Polyamide gegen Hydrolyse bei erhöhten Temperaturen zu schützen.

Polyamide sind im alkalischen Milieu sehr beständig; sie werden jedoch unter dem Einfluß von Säuren - besonders bei gleichzeitiger Anwesenheit von Oxidationsmitteln - sehr leicht hydrolytisch und/oder radikalisch gespalten. Es ist zur Zeit nicht möglich, Polyamide gegen Hydrolyse in einem pH-Bereich ≦ 7, vor allem bei gleichzeitiger Anwesenheit von oxidierenden Substanzen wirksam zu schützen.

Es wurde gefunden, daß sich Polyamide insbesondere 6-Polyamid, 6,6-Polyamide und 12-Polyamide gegen Hydrolyse durch den Zusatz geringer Mengen aromatischer, sterisch gehinderter Carbodiimide wirksam schützen lassen.

Gegenstand der Erfindung sind somit gegen Zersetzung im sauren pH-Bereich insbesondere auch in Anwesenheit oxidierender Medien geschützte Polyamide, insbesondere 6-Polyamide, 6,6-Polyamide und 12-Polyamide, die als Stabilisatoren 0,1 bis 5 Gew.-%, bevorzugt 0,5 bis 4 Gew.-% aromatisches Polycarbodiimid bezogen auf Polyamid enthalten.

Polyamide im Sinne der Erfindung sind insbesondere Polykondensate auf der Basis von ε-Caprolactam (6-Polyamid) oder Adipinsäure/Hexamethylendiamin (6,6-Polyamid) oder γ-Laurylactam (12-Polyamid). Diese Substanzen sind bekanntermaßen gegen Alkalien beständig, jedoch gegen Säuren und oxidierende Medien - vor allem bei höheren Temperaturen - sehr labil.

Aromatische Polycarbodiimide im Sinne der Erfindung sind Reaktionsprodukte substituierter aromatischer Isocyanate wie
2,6-Diisopropylphenylisocyanat,
1,3,5-Triisopropyl-2,4-diisocyanatobenzol, Naphthalin-1,5-diisocyanat,
2,4-Diisocyanato-3,5-diethyltoluol,
4,4'-Methylen-bis-(2,6-diethylphenylisocyanat),
4,4'-Methylen-bis-(2-ethyl-6-methylphenylisocyanat),
4,4'-Methylen-bis-(2-isopropyl-6-methylphenylisocyanat),
4,4'-Methylen-bis-(2,6-diisopropylphenylisocyanat),
4,4'-Methylen-bis-(2-ethyl-6-methylcyclohexylisocyanat).

Die Polycarbodiimide können aus reinen Isocyanaten hergestellt sein, z.B. das Polymerisationsprodukt des 1,3,5-Triisopropyl-2,4-diisocyanatobenzol oder aus einem Gemisch verschiedener Isocyanate, z.B. aus 50 % 1,3,5-Triisopropyl-2,4-diisocyanatobenzol und 50 % 2,4-Diisocyanato-3,5-diethyltoluol.

Die Polymerisation ist prinzipiell bekannt, wird durch übliche Katalysatoren beschleunigt und erfolgt unter Kohlendioxidabspaltung (vgl. J. Org. Chem 28, 2069 (1963); J. Am. Chem. Soc, 84, 3673 (1962); Chem. Rev. 81, 589 (1981); Angew. Chem. 93, 855 (1981).

Bevorzugte Polycarbodiimide sind: 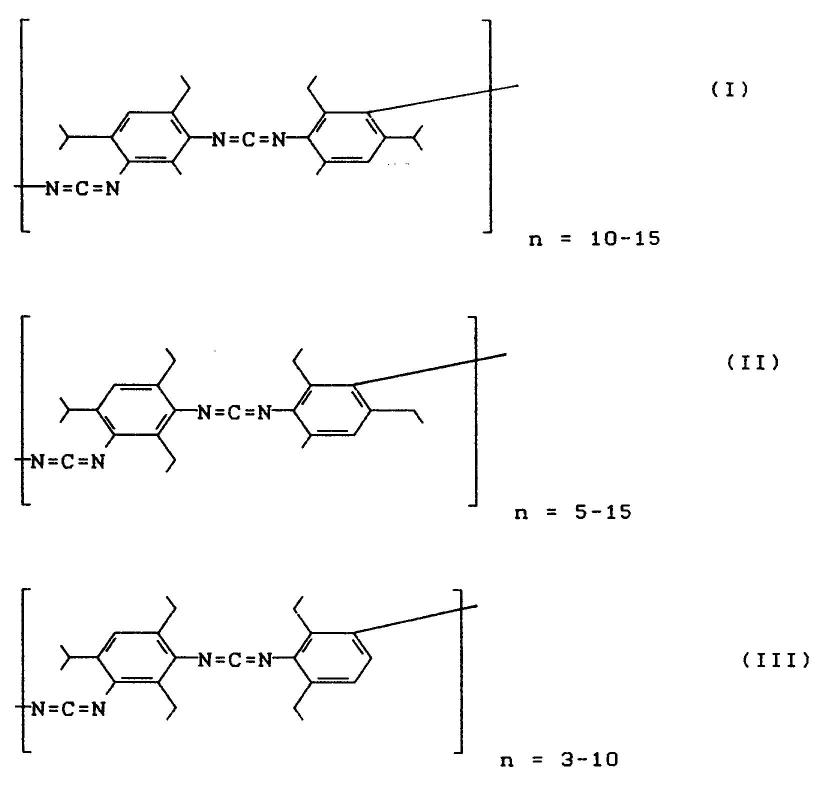
Die erfindungsgemäß gegen Hydrolyse stabilisierten Polyamide können wie folgt hergestellt werden:
Die Polyamide mit einem H₂O-Gehalt ≦ 0,03 %, das aromatische Polycarbodiimid und eventuell zusätzliche Additive werden bei Zimmertemperatur miteinander vermengt und durch einen Zweischneckenkneter mit einem L/D-Verhältnis von 28 - 40 und speziellen Knetelementen oberhalb der Schmelztemperatur des Polyamides extrudiert. Die Bestandteile können alternativ dazu getrennt in den Knetraum des Extruders gebracht und anschließend in der Schmelze homogen verteilt werden. Die Schmelze wird nach dem Extrudieren gekühlt, granuliert und im Vakuum getrocknet. Das so erhaltene Granulat hat einen H₂O-Ge-halt ≦ 0,03 %.

Die so hergestellten Polyamide zeichnen sich durch erhöhte Hydrolysebeständigkeit aus.

### Beispiel 1

12-Polyamid, (Grilamid L 25/Ems AG), und ein pulverförmiges aromatisches Polycarbodiimid, - aus 50 Gew.-% 1,3,5-Triisopropyl-2,4-diisocyanatobenzol und 50 Gew.-% 2,4-Diisocyanato-3,5-diethyltoluol hergestellt -, werden trocken miteinander vermischt und auf einem Zweischneckenkneter aufgeschmolzen, die Schmelze durchmischt und extrudiert. Das Extrudat wird auf einen H₂O-Gehalt ≦ 0,03 % getrocknet und anschließend daraus S-1-Normprüfstäbe spritzgegossen. Diese werden der Hydrolyse in Wasserdampf bei 121°C unterworfen. Als Maß des chemischen Abbaus des Polymeren wird die Abnahme der Reißfestigkeit über die Zeit gewählt (in %), wobei die unbelastete Probe mit 100 angegeben wird.

| | Restreißfestigkeit (%) | | | | | | | |
|---|---|---|---|---|---|---|---|---|
| Zeit (Tage) | 0 | 7 | 14 | 21 | 28 | 35 | 49 | 63 |
| 12-Polyamid (ohne Zusatz) | 100 | 100 | 107 | 107 | 112 | 106 | 61 | 48 |
| 12-Polyamid + 2 % bevorzugt Polyamid Polycarbodiimid ( = 0,27 Gew.-% NCN) | 100 | 96 | 99 | 96 | 100 | 102 | 105 | 105 |

### Beispiel 2

6-Polyamid, (Durethan B 40F der Bayer AG), (6-Pa) wird mit einem pulverförmigen aromatischen Polycarbodiimid aus 1,3,5-Triisopropyl-2,4-diisocyanatobenzol trocken vermischt und in einem schnell drehenden Zweiwellenkneter aufgeschmolzen, die Schmelze durchmischt und extrudiert. Das zylinderförmige Extrudat wird auf einen H₂O-Gehalt ≦ 0,03 % getrocknet und zu S-1-Normprüfstäben spritzgegossen. Diese werden einer Hydrolyse unterworfen unter folgenden Prüfbedingungen:
A) H₂O/Citratpuffer (flüssig); pH = 4; T = 100°C
B) 95 Gew.-% H₂O/5 Gew.-% Al₂ (SO₄)₃ (flüssig); T = 90°C
C) H₂O-Dampf T = 130°C sauerstofffrei
D) H₂O-Dampf T = 121°C sauerstoffhaltig

Als Maß des chemischen Abbaus wird die Abnahme der Zugfestigkeit über die Zeit gewählt (in %), wobei die unbelastete Probe mit 100 angegeben wird.
A)

| | Restreißfestigkeit (%) | | | | | |
|---|---|---|---|---|---|---|
| Zeit (Tage) | 0 | 10 | 15 | 18 | 24 | 28 |
| 6-Pa | 100 | 80 | 73 | 69 | 54 | 32 |
| 6-PA + 2 Gew.-% Polycarbodiimid (= 0,29 % NCN) bezogen auf Polyamid | 100 | 83 | 88 | 88 | 77 | 75 |

B)

| | Restreißfestigkeit (%) | | | | |
|---|---|---|---|---|---|
| Zeit (Tage) | 0 | 5 | 10 | 15 | 18 |
| 6-PA | 100 | 70 | 52 | 10 | - |
| 6-PA + 2 Gew.-% Polycarbodiimid (= 0,29 Gew.-% NCN) bezogen auf Polyamid | 100 | 85 | 70 | 35 | 20 |

C)

| | Restreißfestigkeit (%) | | | | | | |
|---|---|---|---|---|---|---|---|
| Zeit (Tage) | 0 | 3 | 5 | 7 | 14 | 21 | 28 |
| 6-PA | 100 | 69 | 67 | 71 | 61 | 50 | 36 |
| 6-PA + 2,5 Gew.-% Polycarbodiimid (= 0,35 % NCN) bezogen auf Polyamid | 100 | 74 | 70 | 78 | 82 | 75 | 70 |

D)

| | Restreißfestigkeit (%) | | | | | | |
|---|---|---|---|---|---|---|---|
| Zeit (Tage) | 0 | 5 | 7 | 14 | 21 | 24 | 28 |
| 6-PA | 100 | 65 | 56 | 23 | - | - | - |
| 6-PA + 2,5 Gew.-% Polycarbodiimid (= 0,35 % NCN) bezogen auf Polyamid | 100 | 76 | 51 | 40 | 35 | 34 | 30 |

## Patentansprüche

1. Gegen Hydrolyse bei hohen Temperaturen, besonders in saurem Milieu stabilisierte Polyamide, welche 0,1 - 5 Gew.-% eines polymeren, aromatischen Carbodiimides bezogen auf Polyamid enthalten.
